# EUROPEAN PATENT SPECIFICATION

(11) **EP 4 446 121 B1**
(45) Date of publication and mention of the grant of the patent: **22.04.2026**
(21) Application number: 24169381.1
(22) Date of filing: 10.04.2024
(51) Int. Cl.: B41J 2/175

(54) **CARTRIDGE AND CARTRIDGE REUSE METHOD**
KARTUSCHE UND VERFAHREN ZUR WIEDERVERWENDUNG EINER KARTUSCHE
CARTOUCHE ET PROCÉDÉ DE RÉUTILISATION DE CARTOUCHE

(30) Priority: 14.04.2023 JP 2023066414; 04.03.2024 JP 2024032115
(43) Date of publication of application: 16.10.2024
(73) Proprietor: CANON KABUSHIKI KAISHA, Tokyo 146-8501 (JP)
(72) Inventor: KONDO, Soji, Tokyo (JP); TAKAHASHI, Wataru, Tokyo (JP); NANJO, Tatsuo, Tokyo (JP); NAKAJIMA, Takayuki, Tokyo (JP); IINUMA, Keisuke, Tokyo (JP)
(74) Representative: WESER & Kollegen Patentanwälte PartmbB

(56) References cited:
- US-A1- 2003 058 315
- US-A1- 2003 214 565
- US-A1- 2004 165 044
- US-B1- 9 937 725
- US-B2- 7 121 656
- US-B2- 8 491 109

## Description

### BACKGROUND OF THE INVENTION

### Field of the Invention

The present disclosure relates to a cartridge and a cartridge reuse method.

### Description of the Related Art

As a cartridge for a printing system, there has been known a type of cartridge in which a print unit to eject a liquid and an absorber chamber to retain the liquid by using an absorber that absorbs the liquid are integrally formed. Japanese Patent Laid-Open No. H10-95128 (hereinafter referred to as Literature 1) describes an example of a cartridge configured to supply a print head with a liquid as an ink from an absorber chamber in the cartridge in the case where the liquid is consumed by printing or the like, and take air into the absorber chamber from an air communication port.

In order to realize a sustainable society, such as a decarbonized society/circular society, the recovery and reuse of used cartridges is required. In order to reduce plastic, there is a need to collect and reuse used cartridges. If the remaining ink in a cartridge leaks out during the distribution process for collecting used cartridges, there is a high possibility of the print head of malfunctioning due to the ink attached to electric components or the like, so that the reuse rate may be decreased.

Literature 1 discloses a structure in which multiple air chambers are formed by joining a guard member to an inner surface of a lid member, and thereby the ink is prevented from leaking out from the air communication port.

However, in the structure of Literature 1, a communication groove is provided at a tip or base end of a partitioning plate of the guard member or the lid member. If the leaked ink is attached to the surface of the lid member or the guard member, the ink may reach the partitioning plate by flowing over the surface due to a posture change or the like, and resultantly enter the communication groove.
US 2004/0165044 A1 relates to an ink cartridge having a plurality of ink chambers, each ink chamber having a movable member that descends with ink consumption. US 7,121,656 B2 relates to an ink cartridge including: a casing having at least one open face and receiving ink, the casing including a storage space that receives a porous material for absorbing ink.
US 2003/0058315 A1 relates to an ink cartridge in which zigzag air passages are formed at the top of an ink storage chamber. US 9,937,725 B1 relates to a microfluidic dispensing device having a backpressure regulation member to control backpressure. US 8,491,109 B2 relates to a container unit located outside of a liquid ejection apparatus and configured to supply a liquid to the liquid ejection apparatus via a connection path. US 2003/0214565 A1 relates to an ink cartridge for a printing machine having air inflow passageways which are prevented from being clogged with flowing-back ink expanded by e.g. movements of the ink cartridge upon carrying the printing machine.

### SUMMARY OF THE INVENTION

The present invention in its first aspect provides a cartridge as specified in claims 1 to 10 and 12. The present invention in its second aspect provides a cartridge reuse method as specified in claim 11.

Further features of the present invention will become apparent from the following description of exemplary embodiments with reference to the attached drawings.

### BRIEF DESCRIPTION OF THE DRAWINGS

Fig. 1 is a schematic diagram of a printing apparatus in the present disclosure;
Fig. 2 is a perspective view of an external appearance of a cartridge of a printing apparatus according to a first embodiment;
Fig. 3 is an exploded perspective view of the cartridge of the printing apparatus according to the first embodiment;
Fig. 4 is a schematic cross-sectional view of the cartridge of the printing apparatus according to the first embodiment;
Fig. 5 is a perspective view illustrating a side of a lid member to face a partition member in the cartridge of the printing apparatus according to the first embodiment;
Figs. 6A to 6C are a perspective view and a bottom view of the partition member of the cartridge of the printing apparatus according to the first embodiment;
Fig. 7 is a side view of the lid member and the partition member united together in the cartridge of the printing apparatus according to the first embodiment;
Fig. 8 is an enlarged view of a peripheral area of a first communication path of the partition member illustrated in Fig. 6A;
Figs. 9A and 9B are a top view and a schematic cross-sectional view of the cartridge of the printing apparatus according to the first embodiment;
Fig. 10 is an enlarged view of a peripheral area of the first communication path in Fig. 9B;
Fig. 11 is a flowchart presenting a reuse method for the cartridge of the printing apparatus according to the first embodiment;
Fig. 12 is a perspective view of an external appearance of a cartridge of a printing apparatus according to a second embodiment;
Fig. 13 is an exploded perspective view of the cartridge of the printing apparatus according to the second embodiment;
Fig. 14 is a schematic cross-sectional view of the cartridge of the printing apparatus according to the second embodiment;
Figs. 15A to 15D are perspective views and a bottom view illustrating a partition member of the cartridge of the printing apparatus according to the second embodiment; and
Fig. 16 is a schematic cross-sectional view of a tank of a cartridge of a printing apparatus according to the present disclosure.

### DESCRIPTION OF THE EMBODIMENTS

Hereinafter, embodiments of the present disclosure will be described in details in reference to the drawings.

### (First Embodiment)

### (Overview of Inkjet Printing Apparatus)

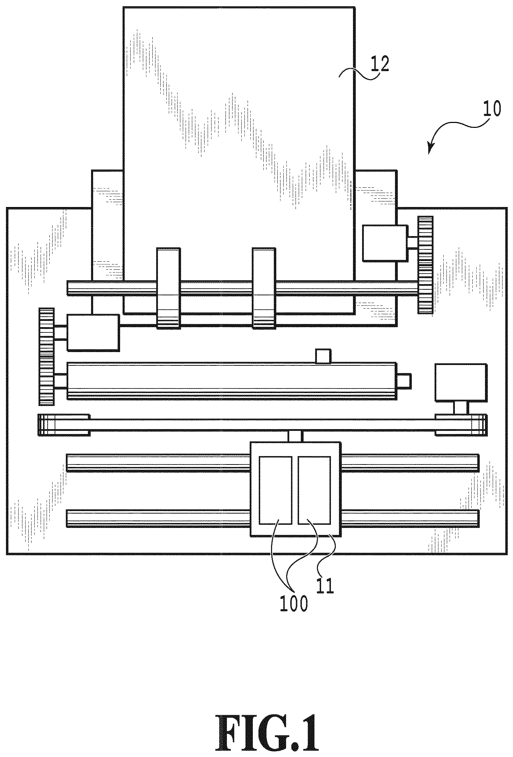

Fig. 1 is a schematic diagram of an inkjet printing apparatus according to the first embodiment. An inkjet printing apparatus 10 (hereinafter also referred to as the printing apparatus) is an on-carriage type of serial printing system, and includes a cartridge 100 and a carriage 11. The cartridge 100 is mounted on the carriage 11. The printing apparatus 10 forms an image on a print sheet 12 by ejecting the ink from the cartridge 100 to the print sheet 12 while reciprocating the carriage 11 and transporting the print sheet 12 by a predetermined distance in a direction orthogonal to the reciprocal movement of the carriage 11.

### (Overview of Cartridge)

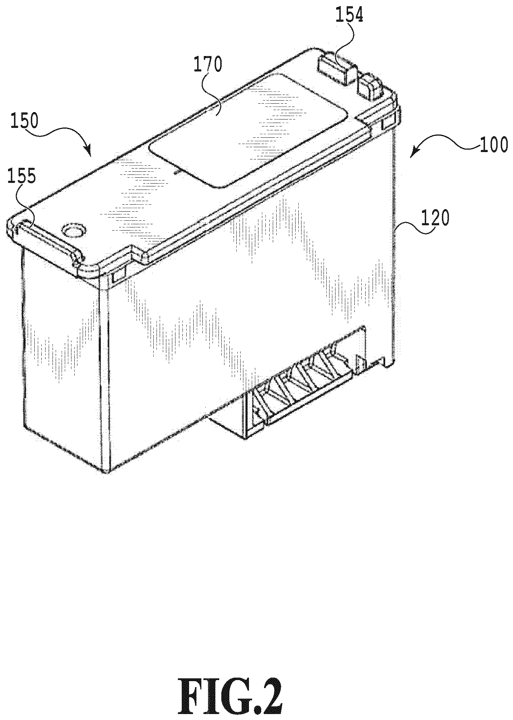

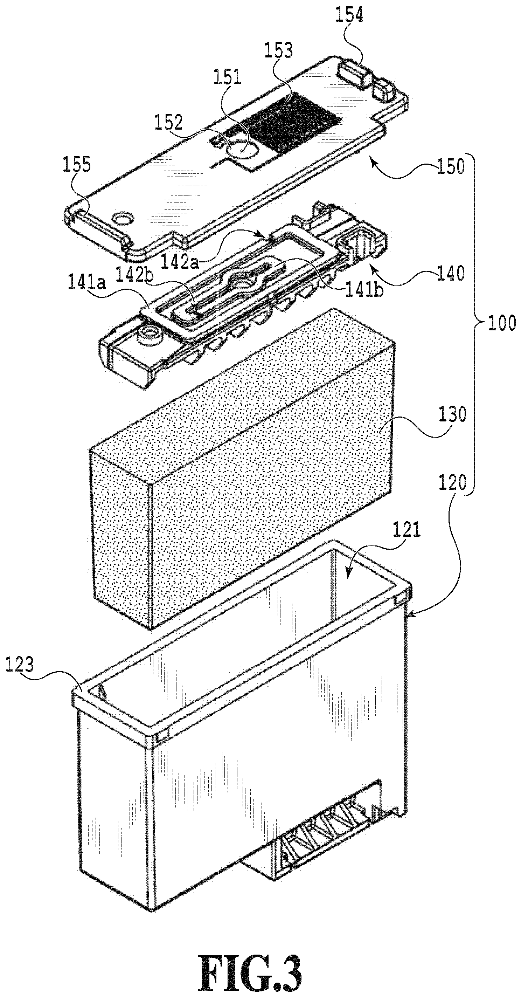

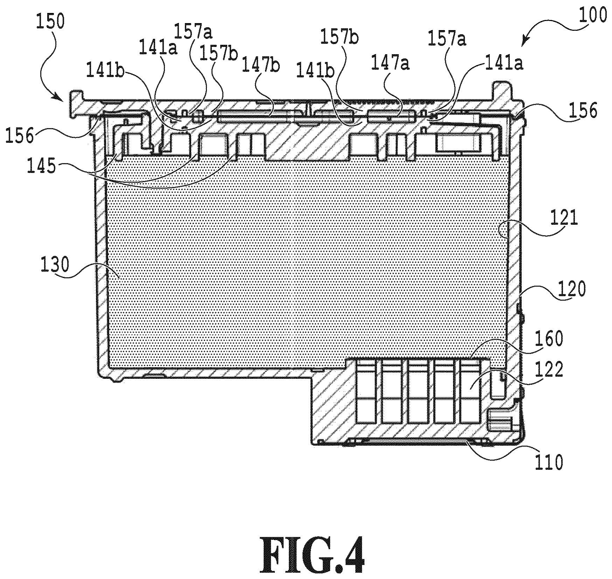

Fig. 2 is a perspective view of the cartridge of the printing apparatus according to the first embodiment, Fig. 3 is an exploded perspective view of the cartridge of the printing apparatus according to the first embodiment, and Fig. 4 is a cross-sectional view of the cartridge of the printing apparatus according to the first embodiment. The cartridge 100 is a type of cartridge that stores a single color of ink therein, generally referred to as a black ink cartridge. Although the present disclosure is also applicable to a type of cartridge that stores multiple colors of inks therein, generally referred to as a color ink cartridge, the present embodiment will be described by using the black ink cartridge.

The cartridge 100 includes a print head 110 (see Fig. 4) to eject the ink, a tank 120 to store the ink, an absorber 130 to absorb and retain the ink, and a partition member 140 (see Fig. 3) to press the absorber 130. The cartridge 100 also includes a lid member 150 joined to the tank 120, and a filter 160 (see Fig. 4) to remove foreign substances in the tank 120. The print head 110 is configured to eject the ink based on ejection data, and is arranged on the bottom surface of the tank 120 located on the lower side in the vertical direction. The absorber 130 is composed of a fibrous body or porous body and is capable of retaining the ink therein by exerting capillary forces. The absorber 130 is held in an absorber chamber 121 (see Fig. 3 and others) of the tank 120 so as to be in contact with the filter 160 for removing foreign substances. Then, the ink in the tank 120 and the absorber 130 is in fluid communication with the print head 110 via the filter 160 (see Fig. 4) and an ink flow path 122 (see Fig. 4). This structure is capable of supplying the ink in the absorber 130 to the print head 110 and performing printing. The lid member 150 is arranged so as to close an opening of the tank 120 and defines the absorber chamber 121 in collaboration with the tank 120. The lid member 150 includes an air communication port 151 (see Fig. 3) and is capable of taking the air into the inside of the tank 120 from outside in the case where the ink in the tank 120 is consumed by printing. The partition member 140 is arranged between the absorber 130 and the lid member 150 and holds the absorber 130 while pushing and fixing the absorber 130. The lid member 150 and the partition member 140 will be described in detail later. Although the cartridge in the present embodiment is configured as a unit integrated with the print head, the cartridge is not limited to this and may be configured as a unit separate from the print head.

### (Explanation of Lid Member and Partition Member)

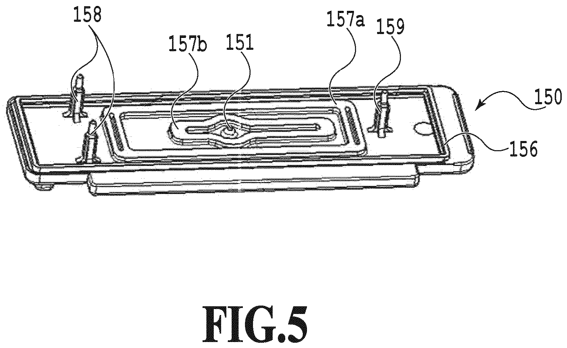

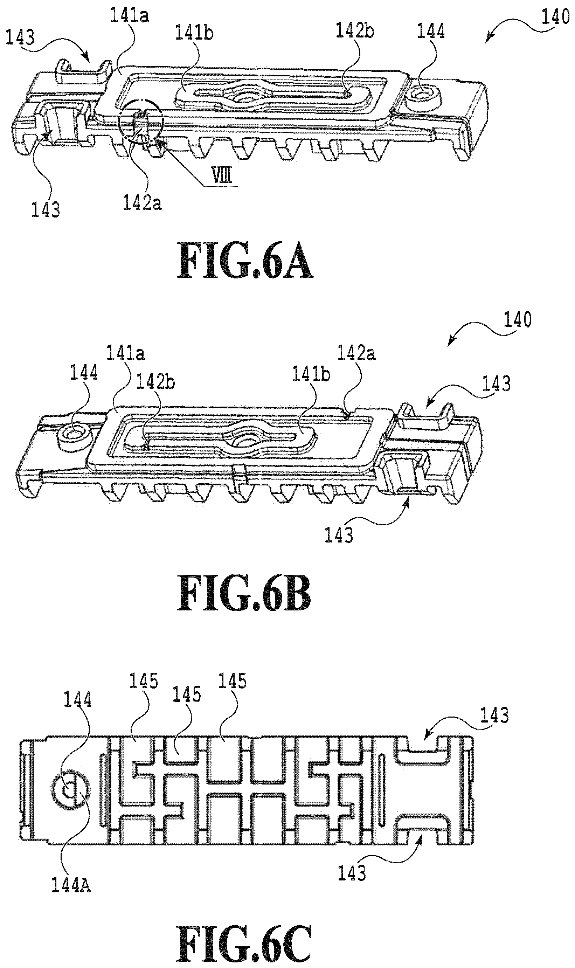

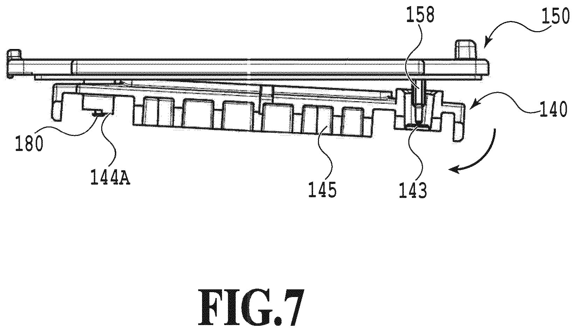

Next, the lid member 150 and the partition member 140 of the cartridge of the printing apparatus according to the present embodiment will be described by using Figs. 2 to 7. Fig. 5 is a perspective view illustrating a side of the lid member 150 to face the partition member 140. Fig. 6A is a perspective view illustrating a side of the partition member 140 to face the lid member 150, Fig. 6B is a perspective view of a side surface opposite to the side surface in Fig. 6A, and Fig. 6C is a plan view of a side of the partition member 140 to face the absorber 130. Fig. 7 is a schematic side view of the lid member 150 and the partition member 140 fixed by crimping and united together.

As shown in Fig. 3, on an outer side, the lid member 150 is provided with the air communication port 151 at a substantially center portion of the lid member 150 and a circular recess 152 formed around the air communication port 151. An air communication groove 153 is formed adjacent to the circular recess 152. An adhesive label 170 (see Fig. 2) is attached to the lid member 150 so as to cover the air communication port 151, the circular recess 152, and the air communication groove 153. This makes it difficult to the ink in the cartridge 100 from leaking or vaporizing during transportation or before use of the cartridge 100. In addition, a protruding main body fixing portion 154 (see Fig. 2 and others) is provided on the outer side of the lid member 150. By fitting a fixing portion (not illustrated) of the carriage 11 to the main body fixing portion 154, the cartridge 100 is fixed to the carriage 11 with high accuracy. In addition, on the outer side of the lid member 150, a protruding grip 155 (see Fig. 2 and others) is provided at a position opposed to the main body fixing portion 154. By pinching the grip 155, a user can firmly hold the grip 155 with his or her fingers and lift the cartridge without slipping.

As illustrated in Fig. 5, a protruding welding rib 156 extending along the outer shape of the lid member 150 is formed on the surface of the lid member 150 to face the partition member 140. The lid member 150 is fixed to the tank 120 by welding by fusing the welding rib 156 of the lid member 150. Specifically, the welding rib 156 of the lid member 150 is brought into pressure contact with a welding surface 123 (see Fig. 3) of the tank 120 and then the lid member 150 is vibrated at high frequency in this state to cause a frictional heat on their contact portions, so that the welding rib 156 and the welding surface 123 are fused with each other. This welding brings the absorber chamber 121 into an air-tight sealed state. Here, the lid member 150 and the tank 120 are made of the same type of plastic material, whose melting temperature is higher than that of a material for the welding rib 156. In the state where the lid member 150 is fixed by welding, the lid member 150 presses the partition member 140 and accordingly the partition member 140 presses the absorber 130. With this pressing, the absorber 130 is held in the absorber chamber 121 in contact with the filter 160. Thus, even if an impact or vibration is applied to the cartridge 100, the absorber 130 is kept unmoved in the absorber chamber 121.

As illustrated in Fig. 5, on the surface of the lid member 150 to face the partition member 140, a first lid member wall rib 157a (first protrusion) and a second lid member wall rib 157b inside the first lid member wall rib 157a are formed so as to largely surround the air communication port 151. As illustrated in Fig. 6A, on the partition member 140, a first partition member wall rib 141a (second protrusion) and a second partition member wall rib 141b surrounded by the first partition member wall rib 141a are formed. In addition, absorber pressing ribs 145 to come into contact with the absorber 130 are formed on a surface of the partition member 140 opposite to the surface on which the first partition member wall rib 141a is formed. The first lid member wall rib 157a and the first partition member wall rib 141a are located relatively at the same positions. The second lid member wall rib 157b and the second partition member wall rib 141b are located relatively at the same positions. With the lid member 150 fixed to the tank 120 by welding, the first lid member wall rib 157a and the first partition member wall rib 141a are brought into contact with each other, and the second lid member wall rib 157b and the second partition member wall rib 141b are brought into contact with each other. As a result, the absorber pressing ribs 145 of the partition member 140 are brought into contact with the absorber 130, and transmit the aforementioned pressing force to the absorber 130.

With the first lid member wall rib 157a (see Fig. 5) and the first partition member wall rib 141a (see Fig. 6) brought into contact with each other, a first protection wall to prevent an ink leakage is formed. Then, with the second lid member wall rib 157b and the second partition member wall rib 141b brought into contact with each other, a second protection wall to prevent an ink leakage is formed. In the first partition member wall rib 141a, a first communication path 142a (a communication path) is formed at a part of the first protection wall. In the second partition member wall rib 141b, a second communication path 142b (a different communication path) is formed at a part of the second protection wall. Thus, the air communication port 151 communicates with the inside of the absorber chamber 121 via the first communication path 142a and the second communication path 142b of these double protection walls.

Each absorber pressing rib 145 has a shape to be in contact with a part of the absorber 130 as illustrated in Fig. 4. Thus, in the case where the absorber 130 is pressed, the ink leaking out from the absorber 130 flows also into portions out of contact with the absorber pressing ribs 145, which prevents the ink from leaking.

The partition member 140 has a narrow long shape. Regarding the dimensions of the partition member 140, for example, a width in a short-side direction is 15.2 mm and a length in the longitudinal direction is 64 mm. In this partition member 140, an aspect ratio, which is a width-to-length ratio (a ratio of the width to the length herein), is 1:4. Even though the partition member 140 has the narrow long shape as illustrated in Fig. 6C, the partition member 140 has a strong structure that hardly deforms owing to a lattice-patterned shape of the absorber pressing ribs 145. Since the partition member 140 has the strong shape, it is possible to downsize the overall members of the cartridge 100.

In the case where an impact such as vibration is applied to the cartridge 100 and an environmental change such as a temperature change or atmospheric pressure change occurs, the ink inside the cartridge 100 may leak out from the air communication port 151. In particular, in the case of distribution for collecting the used cartridge 100, the cartridge 100 has a possibility of being subjected to a more excessive impact or environmental change than in the case of normal distribution, and the ink remaining inside is likely to leak out from the air communication port 151. To stop this ink leakage, the first protection wall is provided which is formed with the first lid member wall rib 157a (see Fig. 5) and the first partition member wall rib 141a (see Fig. 6) brought into contact with each other. In addition, the second protection wall is provided which is formed with the second lid member wall rib 157b and the second partition member wall rib 141b brought into contact with each other.

Moreover, in the present embodiment, a pair of alignment pins 158 (see Fig. 5) are formed in the lid member 150 and alignment notches 143 (see Fig. 6) into which the alignment pins 158 are to be inserted are formed in the partition member 140. This makes it easy to bring the first lid member wall rib 157a into contact with the first partition member wall rib 141a, and also to bring the second lid member wall rib 157b into contact with the second partition member wall rib 141b.

Moreover, in consideration of handling in production, the lid member 150 and the partition member 140 are preferably formed in a united structure. However, since the lid member 150 and the partition member 140 have to be separated from each other in the case of reusing the cartridge to be described later, these members are preferably united appropriately to such an extent as to be separable from each other. For this reason, in the present embodiment, the lid member 150 includes a crimp pin 159 (see Fig. 5), while the partition member 140 includes a crimp opening 144 and a hook portion 144A (see Fig. 6C). Thus, the crimp pin 159 of the lid member 150 is inserted into the crimp opening 144 of the partition member 140 and thermally crimped to form a crimped portion 180 (see Fig. 7), which can be fitted and fixed to the hook portion 144A. Here, the thermal crimping is performed such that the crimped portion 180 of the crimp pin 159 after the crimping has a diameter slightly larger than that of the crimp opening 144, and therefore the crimped portion 180 can be lightly hooked on the hook portion 144A of the partition member 140. In addition, only one crimp position is provided in one end of the partition member 140 in the longitudinal direction. In the case where the lid member 150 is detached from the tank 120, the one ends of the lid member 150 and the partition member 140 are fixed to each other at the crimp position, while the other ends of the lid member 150 and the partition member 140 are separated from each other. In this state, if the partition member 140 is gripped and rotated in an arrow direction in Fig. 7, a force (moment) is applied to the crimped portion 180 as in a bottle opener, so that the lid member 150 and the partition member 140 can be separated from each other with a very light force. Although the united structure of the lid member 150 and the partition member 140 is described hereinabove, this structure is just for the purpose of improving the ease of handling in production. Needless to say, the effects of the present disclosure can be produced even though the lid member 150 and the partition member 140 are formed in a structure other than the united structure.

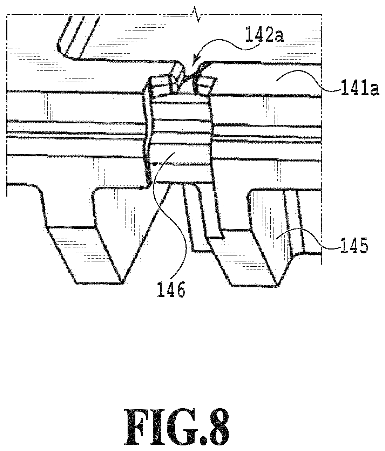

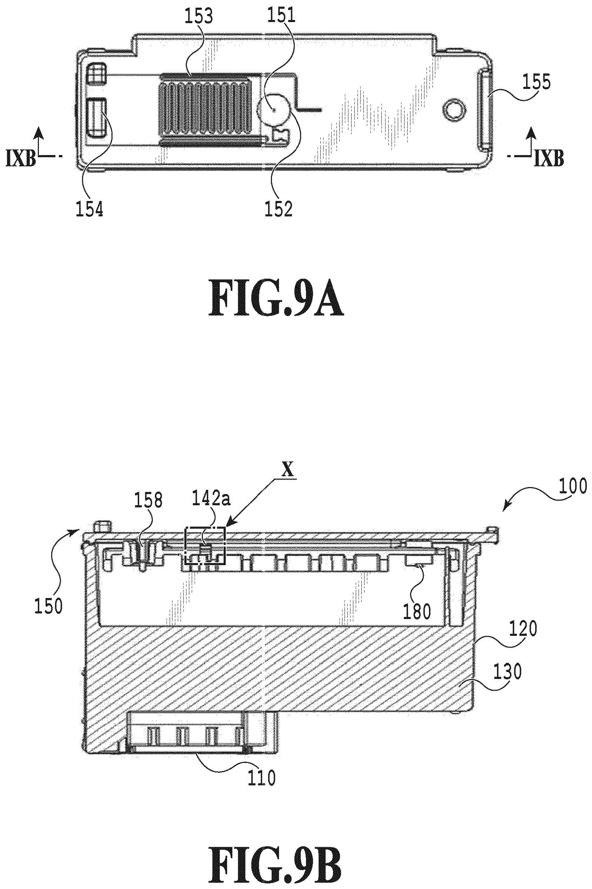

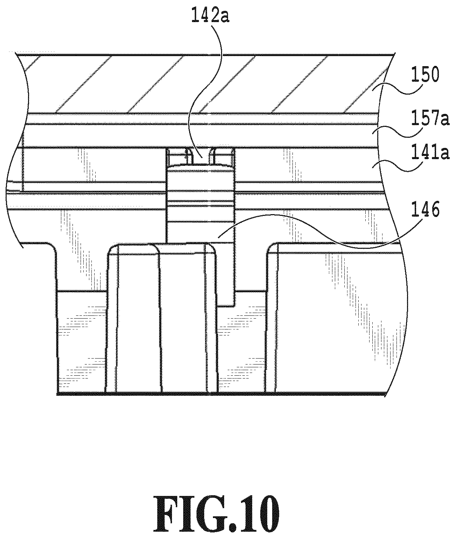

Fig. 8 is an enlarged view of a peripheral area of the first communication path 142a of the partition member 140 as indicated by VIII in Fig. 6A. Fig. 9A is a top view of the cartridge of the printing apparatus according to the first embodiment and Fig. 9B is a schematic cross-sectional view taken along a IXB-IXB line in Fig. 9A. Fig. 10 is an enlarged view of a peripheral area of the first communication path 142a as indicated by X in Fig. 9B.

The first communication path 142a is provided at an upper tip end of the first partition member wall rib 141a and the first communication path 142a is formed at a position upwardly apart from a base end of the first partition member wall rib 141a in the vertical direction. To the first communication path 142a, one end of a discharge groove 146 provided on a side surface of the partition member 140 is connected. The other end of the discharge groove 146 is connected to the absorber pressing rib 145. Thus, the ink attached to the first communication path 142a can be returned to the absorber 130 via the discharge groove 146. The absorber 130 in contact with the absorber pressing rib 145 has such a high absorber density as to easily absorb the leaked ink, so that the ink can be returned efficiently.

Here, as illustrated in Figs. 6A and 6B, the second communication path 142b is provided at an upper tip end of the second partition member wall rib 141b, and the second communication path 142b is formed at a position upwardly apart from a base end of the second partition member wall rib 141b in the vertical direction. One end of the second communication path 142b is connected to a first buffer chamber 147a (see Fig. 4) defined by the first partition member wall rib 141a and the second partition member wall rib 141b. Meanwhile, the other end of the second communication path 142b is connected to a second buffer chamber 147b surrounded by the second partition member wall rib 141b.

As illustrated in Fig. 4, the first buffer chamber 147a is formed with the first lid member wall rib 157a and the first partition member wall rib 141a brought into contact with each other. Meanwhile, the second buffer chamber 147b is formed with the second lid member wall rib 157b and the second partition member wall rib 141b brought into contact with each other. The air introduced from the air communication port 151 is supplied to the absorber chamber 121 through a route including the second buffer chamber 147b, the second communication path 142b, the first buffer chamber 147a, and the first communication path 142a in this order.

The filter 160 (see Fig. 4) can be brought into contact with the absorber 130 because some of the absorber pressing ribs 145 of the partition member 140 are arranged above the filter 160. Thus, the ink in the absorber 130 can be stably supplied to the print head 110 via the filter 160.

In some rare cases, the cartridge 100 is subjected to an impact such as a vibration and the occurrence of an environmental change such as a temperature change or atmospheric pressure change. In such a case, the ink inside the cartridge 100 may leak out from the air communication port 151. In particular, in the case of distribution for collecting the used cartridge 100, the cartridge 100 has a possibility of being subjected to a more excessive impact or environmental change than in the case of normal distribution, and the ink remaining inside is more likely to leak out from the air communication port 151.

According to the structure of the present disclosure, the air communication port 151 is surrounded by the second protection wall (141b and 157b) and the first communication path 142a and the second communication path 142b are provided at the upper tip ends of the first partition member wall rib 141a and the second partition member wall rib 141b. For this reason, even if the ink is leaked out from the absorber 130 (see Fig. 4) and is attached to the lid member 150 or the partition member 140, the ink can be prevented from entering the air communication port 151. The first communication path 142a may be formed at a tip end of the first lid member wall rib and the second communication path 142b may be formed at a tip end of the second lid member wall rib.

Even if the ink enters the inside of the first protection wall (141a and 157a), the presence of the first buffer chamber 147a makes it possible to reduce an ink leakage from the air communication port 151. Moreover, since the second buffer chamber 147b formed by the second protection wall (141b and 157b) is provided, the ink leakage from the air communication port 151 can be reduced more. In the present embodiment, the first protection wall and the second protection wall are provided. Instead, only one protection wall may be provided or two or more protection walls may be provided. In addition, the number of communication paths may be two or more corresponding to the number of protection walls.

Further, in the case where the ink is attached to the first communication path 142a, the ink on the first communication path 142a can be returned to the absorber 130 via the discharge groove 146 depending on a posture of the lid member 150 mounted on a printing apparatus main body.

If the ink is attached to a communication path, a meniscus may be generated in the communication path. In the state where the meniscus is generated in the communication path, as the ink is consumed, the outside air is introduced from the air communication port and a pressure drop occurs to increase a back pressure, which may lead to a printing failure. However, by preventing a meniscus from being generated in the first communication path 142a, the structure in the present disclosure can prevent a printing failure due to a pressure drop along with the introduction of the air from the air communication port 151. The discharge groove 146 is opened to the protection wall surface. For this reason, even if the ink enters a gap between the lid member and the partition member, the ink can be returned to the absorber 130 through the discharge groove 146.

### (Comparative Example of Absorber Cleaning Method)

The present disclosure has an object to make the absorber of a used cartridge clean and free from clogging. Although a comparative example proposes an absorber cleaning method for cleaning an absorber without detaching a lid, the present disclosure does not employ the above method for the following reasons.

As a comparative example of a used absorber cleaning method, there is a method disclosed in Japanese Patent Laid-Open No. 2000-238283 or the like. This cleaning method is to clean a porous body (hereinafter referred to as an absorber) by injecting a cleaning liquid through a hollow needle to cause the cleaning liquid to permeate the absorber and then discharging the cleaning liquid from an ink supply port (head). This cleaning method has advantages of being very simple and achieving reuse at low cost. However, with this cleaning method, it is sometimes difficult to thoroughly wash the remaining ink from the absorber. As described above, if the remaining ink in the absorber is solidified, the cleaning liquid has to re-dissolve the solidified ink and then discharge it. In order to re-dissolve the solidified ink, it is necessary to inject the cleaning liquid into the absorber, soak the ink in the cleaning liquid for a long period of time, and thereby gradually dissolve the ink. If the ink is not fully re-dissolved, the absorber cannot be thoroughly cleaned even with multiple times of injections of the cleaning liquid. If cleaning by soaking the ink in the cleaning liquid for a long period of time is selected, the cleaning requires a considerable time, which causes another problem of making mass production impossible. In addition, this cleaning method is considered to have a possibility that the cleaning liquid having permeated the absorber and the remaining ink may fail to be discharged completely and remain in the absorber. The cleaning liquid having permeated the absorber has to be discharged by sucking from the ink supply port. During this suction, however, if an air path is formed, only the air inside the cartridge may be sucked out, and the cleaning liquid and the remaining ink that are desired to be discharged may be left behind. If a new ink is injected to the cartridge having the cleaning liquid and the remaining ink left behind, the color of the ink may change and a desired image may not be formed.

For the above reasons, in order to certainly ensure a clean absorber, it is necessary to detach the lid member and take out and wash the absorber or use a new absorber, so the reuse method in the present disclosure is adopted.

### (Reuse Method in Present Embodiment)

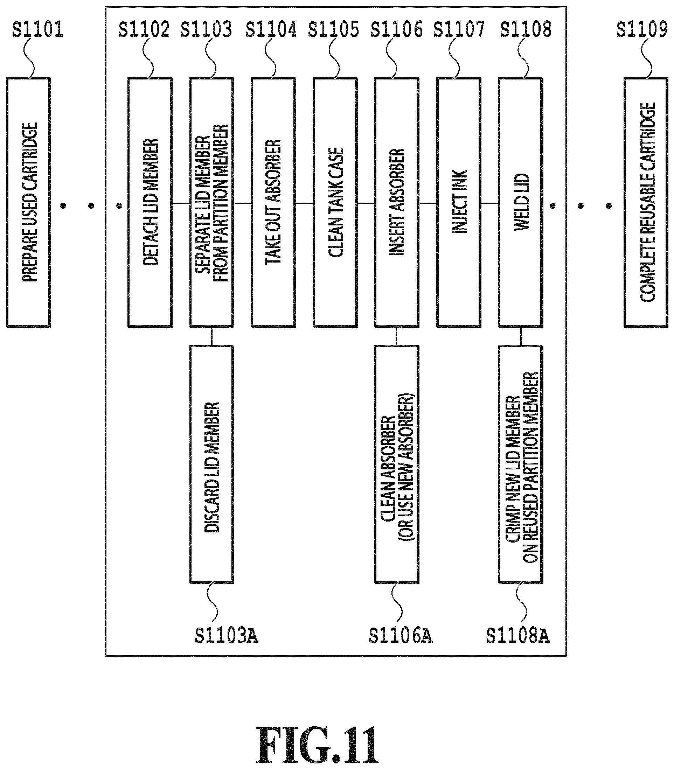

The cartridge reuse method in the present embodiment according to the present disclosure will be described by using Fig. 11. A cartridge reuse process in the present embodiment includes steps starting from a lid member detaching step S1102 of detaching the lid member 150 from the cartridge 100 and ending at a lid member welding step S1108 of welding the lid member 150, each of which will be described in detail. Fig. 11 presents steps from the lid member detaching step to the lid member welding step in a cartridge reuse process flow.

The cartridge reuse process starts from step S1101 of preparing a used cartridge 100. Next, after the external appearance of the cartridge is checked and cleaned, the process proceeds to the lid member detaching step S1102 of detaching the lid member 150. In this step, the lid member 150 is moved relative to the tank 120 and thereby the lid member 150 is detached. Then, the process proceeds to a separating step S1103 of separating the lid member 150 and the partition member 140 from each other. In the separating step S1103, since the lid member 150 and the partition member 140 are united by crimping, the lid member 150 and the partition member 140 are separated. In this fixing by crimping, the lid member 150 and the partition member 140 are fixed to the extent that they can be separated easily as described above. For this reason, the partition member 140 can be relatively moved and separated from the lid member 150. The separated lid member 150 is discarded while the partition member 140 will be reused. Then, the process proceeds to an absorber taking-out step S1104, where the absorber 130 in which the ink is exhausted is taken out from the tank 120. Then, the process proceeds to a tank cleaning step S1105. In the tank cleaning step S1105, the inside of the tank 120 is cleaned. Then, the process proceeds to an absorber inserting step S1106. In the absorber inserting step S1106, the absorber (S1106A) obtained by cleaning the absorber 130 taken out in the absorber taking-out step S1104 may be inserted into the tank 120. Instead, in the absorber inserting step S1106, a new absorber may be inserted into the tank 120. In an absorber cleaning step S1106A, the absorber 130 is cleaned not only by permeating the cleaning liquid and sucking/discharging the cleaning liquid in only one direction, but also by immersing the entire absorber 130 into the cleaning liquid and permeating the cleaning liquid throughout the absorber 130. In the cleaning liquid, the absorber 130 may be cleaned by being pressed and deformed, so that the remaining ink can be removed thoroughly. After the absorber inserting step S1106, the process proceeds to an ink injecting step S1107, where the ink is permeated into the absorber 130 by an injection needle or the like, and thereby is injected into the tank 120. Then, before the lid member welding step S1108 is performed, a thermal crimping step S1108A is performed to thermally crimp the lid member 150 onto the partition member 140. In the crimping step S1108A, the thermal crimping is performed by using a new lid member as the lid member 150 and the partition member 140 separated in the separating step S1103 as the partition member 140. In the thermal crimping in this step, the lid member 150 is crimped to the extent that the lid member 150 can be easily separated by hands in consideration of future reuse. The lid member 150 and the partition member 140 united together are placed on the absorber and the lid member welding step S1108 is performed. Since the lid member 150 is the new lid member, it is possible to perform the welding that ensures an air-tight seal. Subsequently, the reusable cartridge is completed at step S1109 after printing inspection and packaging.

In the case of the black ink cartridge in the present embodiment described above, the weight of the lid member 150 is about 13% and the weight of the partition member 140 is about 11% in the total weight of the cartridge containing no ink. If the lid member 150 is discarded and the partition member 140 is reused, the reuse rate is about 87%. In the case of a type of lid in the comparative example in which the lid member 150 and the partition member 140 are united into one body, the weight of the lid is about 19% and the reuse rate is 81% if the lid is discarded. Since the lid member 150 is a substantially-flat plate-shaped component, the weight of the component that must be discarded can be reduced to the minimum possible extent and the reuse rate can be improved as compared with the lid in the comparative example.

### (Second Embodiment)

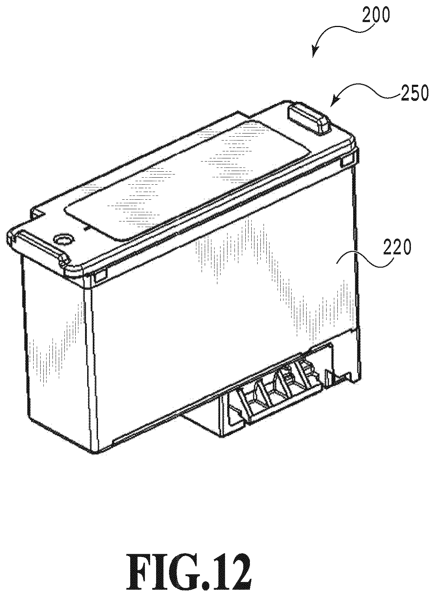

A second embodiment in the present disclosure will be described by using Figs. 12 to 14. The basic structure in the present disclosure and the same functions and structures as in the first embodiment will be omitted from the description and only different points will be described.

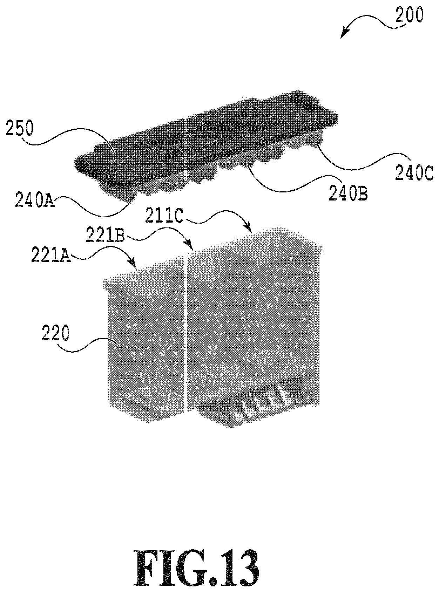

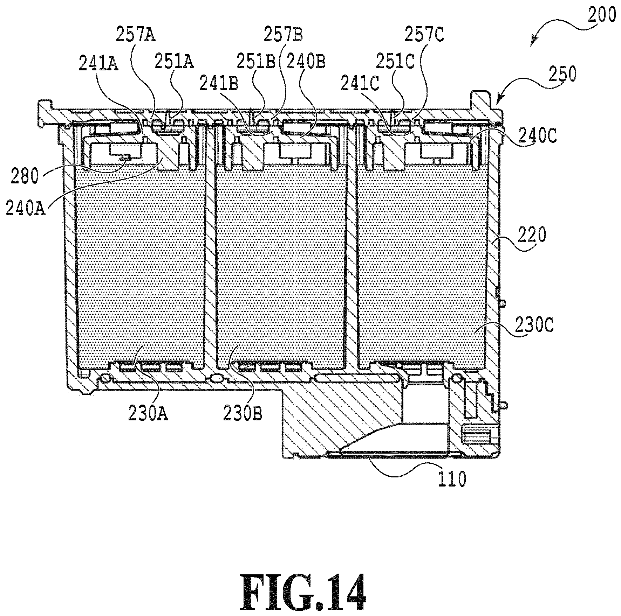

Fig. 12 is a perspective view of an external appearance of a cartridge of a printing apparatus according to the second embodiment. Fig. 13 is an exploded perspective view of the cartridge of the printing apparatus according to the second embodiment. Fig. 14 is a schematic cross-sectional view of the cartridge of the printing apparatus according to the second embodiment. The cartridge in the second embodiment is a type of cartridge that stores three colors of inks, generally referred to as a color ink (cyan, magenta, and yellow) cartridge 200.

The cartridge 200 includes a print head 110 to eject the inks, a tank 220 to store the inks, absorbers 230A, 230B, and 230C to absorb and hold the respective inks, and partition members 240A, 240B, and 240C to press the respective absorbers 230. Here, the three absorbers 230A, 230B, and 230C may be collectively referred to as the absorber 230. Also, the partition members 240A, 240B, and 240C may be collectively referred to as the partition member 240. The cartridge 200 includes a lid member 250 joined to the tank 220, and a filter 260 to remove foreign substances in the tank 220. The absorbers 230A, 230B, and 230C are held in their respective absorber chambers 221A, 221B, and 221C of the tank 220 so as to be in contact with the filter 160 for removing foreign substances. The inks in the tank 220 and the absorbers 230A, 230B, and 230C are in fluid communication with the print head 110 via the filter 160 and ink flow paths 122. This structure makes it possible to supply the inks in the absorbers 230A, 230B, and 230C to the print head 110. The lid member 250 is arranged so as to close an opening of the tank 220 and defines the absorber chambers 221A, 221B, and 221C in collaboration with the tank 220. The lid member 250 includes air communication ports 251A, 251B, and 251C (hereinafter, may also be collectively referred to as the air communication port 251) in air communication with their respective absorber chambers and is capable of taking the air into the inside of the tank 220 from outside in the case where the inks in the tank 220 are consumed by printing. The partition members 240A, 240B, and 240C are arranged between the respective absorbers 230A, 230B, and 230C and the lid member 250, and hold the absorbers 230A, 230B, and 230C while fixing them. Also in the present embodiment, the same effects can be produced by using a structure similar to that of the first embodiment. In particular, in the case of reuse of the lid member 250, it is necessary to seal all the three absorber chambers, so that the welding yield is presumably decreased as compared with the case of a one-color cartridge. From this viewpoint, the present embodiment may be a reuse method more effective than in the first embodiment. The partition members in the present embodiment include three partition members for the respective inks, but are not limited to this case. The partition member may consist of a single partition member or two or more partition members except for three partition members. Also, the tank in the present embodiment is structured such that the three absorber chambers are formed and the three absorbers are held in the respective three absorber chambers, but is not limited to this, and may be structured such that two or more absorber chambers are formed and two or more absorbers are held in the respective absorber chambers.

### (Explanation of Lid Member and Partition Member)

Next, the lid member and the partition members of the cartridge of the printing apparatus in the present embodiment will be described.

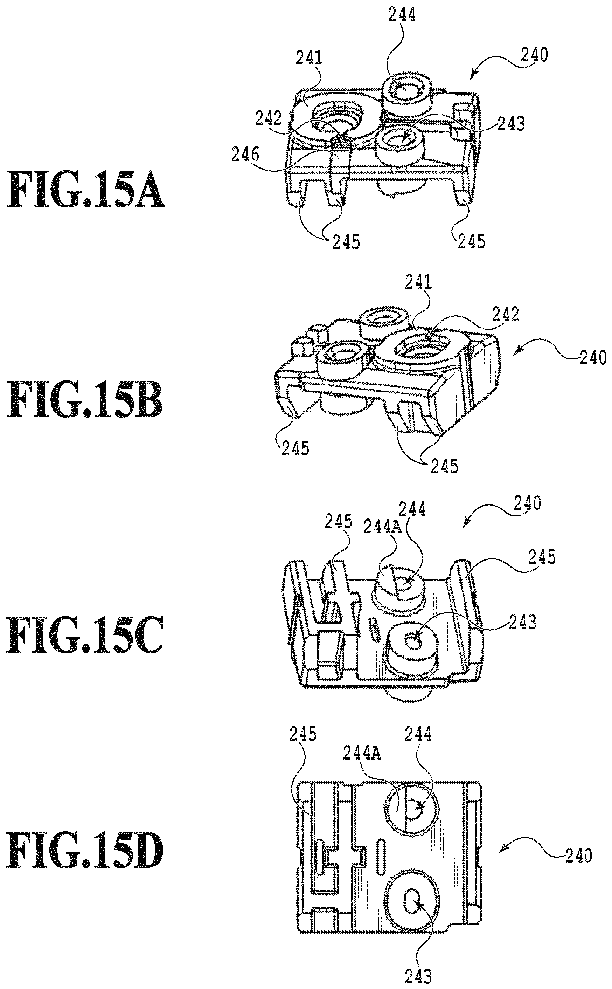

Fig. 15A is a perspective view illustrating the partition member 240 of the cartridge of the printing apparatus according to the second embodiment and Fig. 15B is a perspective view seen from a side opposite to the side in Fig. 15A. Fig. 15C is a perspective view seen from the bottom in Fig. 15A and Fig. 15D is a bottom view illustrating the partition member 240 of the cartridge of the printing apparatus according to the second embodiment.

As shown in Fig. 14, on a surface of the lid member 250 to face the partition members 240, a lid member wall rib 257 is formed so as to surround each air communication port 251. As shown in Fig. 15, a partition member wall rib 241 is formed on the partition member 240. Then, on a surface of the partition member 240 to face the absorber 230, absorber pressing ribs 245 are formed. The lid member wall rib 257 and the partition member wall rib 241 are located relatively at the same positions. With the lid member 250 fixed by welding, the lid member wall rib 257 and the partition member wall rib 241 are brought into contact with each other, so that the absorber pressing ribs 245 of the partition member 240 are brought into contact with the absorber 230, and transmit the aforementioned pressing force to the absorber 230.

With the lid member wall rib 257 (see Fig. 14) and the partition member wall rib 241 brought into contact with each other, a protection wall to prevent an ink leakage is formed. A communication path 242 (see Fig. 15A and others) is provided at an upper tip end of the partition member wall rib 241 and the communication path 242 is formed at a position upwardly apart from a base end of the partition member wall rib 241 in the vertical direction. To the communication path 242, one end of a discharge groove 246 provided on a side surface of the partition member 240 is connected. The other end of the discharge groove 246 is connected to the absorber pressing rib 245. Thus, the ink attached to the communication path 242 can be returned to the absorber 230 via the discharge groove 146.

In the present embodiment, an alignment pin (not illustrated) and a crimp pin (not illustrated) are formed in the lid member 250. In the partition member 240, an alignment opening 243 into which the alignment pin is to be inserted, a crimp opening 244 into which the crimp pin is insertable, and a hook portion 244A are formed. In this structure, the alignment pin is inserted into the alignment opening 243 and the crimp pin is inserted to the crimp opening 244. Then, the tip end of the crimp pin is thermally crimped to form a crimped portion 280 (see Fig. 14). As a result, the crimped portion 280 is hooked and thereby fixed to the hook portion 244A of the partition member.

From the viewpoint of ease of reuse, a hooking shape for fixing the lid member 250 and the partition member 240, such as the crimped portion 280, is preferably as easy to break as possible. In the present embodiment, as illustrated in Fig. 15D, the hook portion 244A has a semi-circular shape and only a part of the crimped portion 280 is hooked. Thus, in the operation of separating the lid member 250 and the partition member 240 for reuse, the separation is easy because only the part of the crimped portion 280 has to be broken.

### (Other Embodiments)

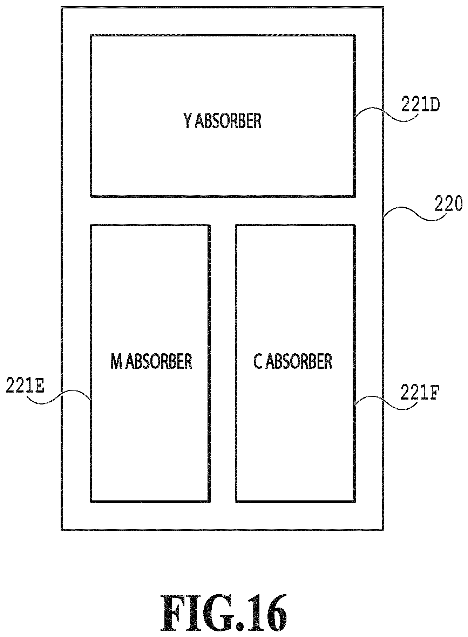

The structures of the lid member and the partition member in the embodiments of the present disclosure may be adapted to a tank in any shape. As an example, in the present disclosure, the tank 220 can be adapted to support a cartridge including multiple absorber chambers as illustrated in Fig. 12. In addition, Fig. 16 is a schematic cross-sectional view of a tank taken along a direction orthogonal to the vertical direction. The present disclosure is also applicable to a structure where a tank is divided into three by a T-shaped wall and the absorbers are arranged in parts of absorber chambers 221D, 221E, and 221F.

The technologies described in this specification have the potential to contribute to the achievement of a sustainable society, such as a decarbonized society/circular society.

## Claims

1. A cartridge (100) comprising:
an absorber (130) configured to retain a liquid;
a tank (120) including an opening and an absorber chamber (121) configured to hold the absorber (130);
a lid member (150) joined to the tank so as to seal the opening and including an air communication port (151) in communication with atmosphere; and
a partition member (140);
wherein the lid member (150) includes a first protrusion (157a) to protrude toward the partition member (140);
**characterized in that**
the partition member (140) is arranged between the lid member (150) and the absorber (130) located inside the absorber chamber (121),
the first protrusion (157a) is formed to surround the air communication port (151),
the partition member (140) includes a groove (146) to be connected to the absorber chamber (121), and further includes a second protrusion (141a) to face the first protrusion (157a), and
the first protrusion and the second protrusion form a wall in a part of which a communication path (142a) communicating with the air communication port (151) is formed between the first protrusion (157a) and the second protrusion (141a).

2. The cartridge according to claim 1, wherein the communication path is formed at a tip end of the second protrusion in the partition member.

3. The cartridge according to claims 1 or 2, wherein an absorber pressing rib (145) to be in contact with the absorber is formed in the partition member.

4. The cartridge according to claim 3, wherein one end of the groove is connected to the second protrusion and the other end of the groove is connected to the absorber pressing rib.

5. The cartridge according to claim 1, wherein the communication path is formed at a tip end of the first protrusion of the lid member.

6. The cartridge according to any one of claims 1 to 5, wherein the lid member includes a third protrusion (157b) inside the first protrusion.

7. The cartridge according to claim 6, wherein
the partition member includes a fourth protrusion (141b) to face the third protrusion, and
a different communication path (142b) other than the communication path (142a) is formed between the third protrusion and the fourth protrusion.

8. The cartridge according to any one of claims 1 to 7, wherein the air communication port communicates with a print head (110) configured to eject the liquid.

9. The cartridge according to any one of claims 1 to 8, wherein
the tank includes one absorber chamber, and
one absorber is held in the absorber chamber.

10. The cartridge according to any one of claims 1 to 9, wherein
the tank includes a plurality of absorber chambers, and
a plurality of the absorbers are held in the plurality of absorber chambers, respectively.

11. A cartridge reuse method for allowing reuse of a cartridge according to any one of claims 1 to 10 after the cartridge consumes a liquid,
the method comprising the steps of:
preparing a cartridge having consumed the liquid;
detaching the lid member from the tank;
separating the lid member from the partition member;
exchanging the absorber;
cleaning an inside of the tank;
inserting an absorber renewed in the absorber exchanging step into the tank and injecting the liquid into the tank;
fitting a lid member different from the lid member to the partition member; and
welding the different lid member to the tank.

12. The cartridge according to any one of claims 1 to 10, wherein
the groove is communicated to the air communication port.

## Patentansprüche

1. Kartusche (100), umfassend:
einen Absorber (130), der konfiguriert ist, eine Flüssigkeit zurückzuhalten;
einen Tank (120), der eine Öffnung und eine Absorberkammer (121) beinhaltet, die konfiguriert ist, den Absorber (130) zu halten;
ein Deckelelement (150), das so mit dem Tank verbunden ist, dass es die Öffnung abdichtet, und einen Luftverbindungsdurchlass (151) beinhaltet, der mit der Atmosphäre in Verbindung steht; und
ein Trennelement (140);
wobei das Deckelelement (150) einen ersten Vorsprung (157a) beinhaltet, der in Richtung des Trennelements (140) vorsteht;
**dadurch gekennzeichnet, dass**
das Trennelement (140) zwischen dem Deckelelement (150) und dem innerhalb der Absorberkammer (121) befindlichen Absorber (130) angeordnet ist,
der erste Vorsprung (157a) so ausgebildet ist, dass er den Luftverbindungsdurchlass (151) umgibt,
das Trennelement (140) eine Nut (146) beinhaltet, die mit der Absorberkammer (121) zu verbinden ist, und ferner einen zweiten Vorsprung (141a) beinhaltet, der dem ersten Vorsprung (157a) zugewandt ist, und
der erste Vorsprung und der zweite Vorsprung eine Wand bilden, in der in einem Teil ein Verbindungsweg (142a), der mit dem Luftverbindungsdurchlass (151) in Verbindung steht, zwischen dem ersten Vorsprung (157a) und dem zweiten Vorsprung (141a) ausgebildet ist.

2. Kartusche nach Anspruch 1, wobei der Verbindungsweg an einer Spitze des zweiten Vorsprungs in dem Trennelement ausgebildet ist.

3. Kartusche nach Anspruch 1 oder 2, wobei eine Absorberdruckrippe (145), die mit dem Absorber in Kontakt stehen soll, in dem Trennelement ausgebildet ist.

4. Kartusche nach Anspruch 3, wobei ein Ende der Nut mit dem zweiten Vorsprung verbunden ist und das andere Ende der Nut mit der Absorberdruckrippe verbunden ist.

5. Kartusche nach Anspruch 1, wobei der Verbindungsweg an einer Spitze des ersten Vorsprungs des Deckelelements ausgebildet ist.

6. Kartusche nach einem der Ansprüche 1 bis 5, wobei das Deckelelement einen dritten Vorsprung (157b) innerhalb des ersten Vorsprungs beinhaltet.

7. Kartusche nach Anspruch 6, wobei
das Trennelement einen vierten Vorsprung (141b) beinhaltet, der dem dritten Vorsprung zugewandt ist, und
ein anderer Verbindungsweg (142b) als der Verbindungsweg (142a) zwischen dem dritten Vorsprung und dem vierten Vorsprung ausgebildet ist.

8. Kartusche nach einem der Ansprüche 1 bis 7, wobei der Luftverbindungsdurchlass mit einem Druckkopf (110) in Verbindung steht, der konfiguriert ist, die Flüssigkeit auszustoßen.

9. Kartusche nach einem der Ansprüche 1 bis 8, wobei
der Tank eine Absorberkammer beinhaltet, und
ein Absorber in der Absorberkammer gehalten wird.

10. Kartusche nach einem der Ansprüche 1 bis 9, wobei
der Tank mehrere Absorberkammern beinhaltet, und
mehrere der Absorber in den jeweiligen mehreren Absorberkammern gehalten werden.

11. Kartuschenwiederverwendungsverfahren zum Ermöglichen einer Wiederverwendung einer Kartusche nach einem der Ansprüche 1 bis 10, nachdem die Kartusche eine Flüssigkeit verbraucht,
wobei das Verfahren die folgenden Schritte umfasst:
Vorbereiten einer Kartusche, die die Flüssigkeit verbraucht hat;
Lösen des Deckelelements vom Tank;
Trennen des Deckelelements vom Trennelement;
Austauschen des Absorbers;
Reinigen eines Inneren des Tanks;
Einführen eines Absorbers, der in dem Absorberaustauschschritt erneuert wurde, in den Tank und Einspritzen der Flüssigkeit in den Tank;
Anbringen eines anderen Deckelelements als das Deckelelement an dem Trennelement; und
Schweißen des anderen Deckelelements an den Tank.

12. Kartusche nach einem der Ansprüche 1 bis 10, wobei
die Nut mit dem Luftverbindungsdurchlass in Verbindung steht.

## Revendications

1. Cartouche (100) comprenant :
un absorbeur (130) configuré pour retenir un liquide ;
un réservoir (120) comportant une ouverture et une chambre d'absorbeur (121) configurée pour contenir l'absorbeur (130) ;
un élément couvercle (150) assemblé avec le réservoir de manière à sceller l'ouverture et comportant un orifice de communication d'air (151) en communication avec l'atmosphère ; et
un élément cloison (140) ;
dans laquelle l'élément couvercle (150) comporte une première saillie (157a) pour faire saillie vers l'élément cloison (140) ;
**caractérisée en ce que**
l'élément cloison (140) est agencé entre l'élément couvercle (150) et l'absorbeur (130) situé à l'intérieur de la chambre d'absorbeur (121),
la première saillie (157a) est formée pour entourer l'orifice de communication d'air (151),
l'élément cloison (140) comporte une rainure (146) devant être reliée à la chambre d'absorbeur (121), et comporte en outre une deuxième saillie (141a) pour faire face à la première saillie (157a), et
la première saillie et la deuxième saillie forment une paroi dans une partie de laquelle un chemin de communication (142a) communiquant avec l'orifice de communication d'air (151) est formé entre la première saillie (157a) et la deuxième saillie (141a).

2. Cartouche selon la revendication 1, dans laquelle le chemin de communication est formé à une extrémité de pointe de la deuxième saillie dans l'élément cloison.

3. Cartouche selon les revendications 1 ou 2, dans laquelle une nervure de pression d'absorbeur (145) devant être en contact avec l'absorbeur est formée dans l'élément cloison.

4. Cartouche selon la revendication 3, dans laquelle une extrémité de la rainure est reliée à la deuxième saillie et l'autre extrémité de la rainure est reliée à la nervure de pression d'absorbeur.

5. Cartouche selon la revendication 1, dans laquelle le chemin de communication est formé à une extrémité de pointe de la première saillie de l'élément couvercle.

6. Cartouche selon l'une quelconque des revendications 1 à 5, dans laquelle l'élément couvercle comporte une troisième saillie (157b) à l'intérieur de la première saillie.

7. Cartouche selon la revendication 6, dans laquelle l'élément cloison comporte une quatrième saillie (141b) pour faire face à la troisième saillie, et
un chemin de communication (142b) différent autre que le chemin de communication (142a) est formé entre la troisième saillie et la quatrième saillie.

8. Cartouche selon l'une quelconque des revendications 1 à 7, dans laquelle l'orifice de communication d'air communique avec une tête d'impression (110) configurée pour éjecter le liquide.

9. Cartouche selon l'une quelconque des revendications 1 à 8, dans laquelle
le réservoir comporte une chambre d'absorbeur, et
un absorbeur est contenu dans la chambre d'absorbeur.

10. Cartouche selon l'une quelconque des revendications 1 à 9, dans laquelle
le réservoir comporte une pluralité de chambres d'absorbeurs, et
une pluralité des absorbeurs sont contenus dans la pluralité de chambres d'absorbeurs, respectivement.

11. Procédé de réutilisation de cartouche pour permettre la réutilisation d'une cartouche selon l'une quelconque des revendications 1 à 10 après que la cartouche a consommé un liquide,
le procédé comprenant les étapes consistant à :
préparer une cartouche ayant consommé le liquide ;
détacher l'élément couvercle du réservoir ;
séparer l'élément couvercle de l'élément cloison ;
remplacer l'absorbeur ;
nettoyer un intérieur du réservoir ;
insérer un absorbeur renouvelé lors de l'étape de remplacement d'absorbeur dans le réservoir et injecter le liquide dans le réservoir ;
positionner un élément couvercle différent de l'élément couvercle sur l'élément cloison ; et
souder l'élément couvercle différent au réservoir.

12. Cartouche selon l'une quelconque des revendications 1 à 10, dans laquelle
la rainure est mise en communication avec l'orifice de communication d'air.
